# FASCICULE DE BREVET EUROPEEN

(11) **EP 1 136 845 B1**
(45) Date de publication et mention de la délivrance du brevet: **15.10.2008**
(21) Numéro de dépôt: 01400738.9
(22) Date de dépôt: 22.03.2001
(51) Int. Cl.: G01V 3/10

(54) **Circuit de détection de la présence d'un aimant permanent au voisinage d'un dispositif médical actif**
Detektierschaltung für die Anwesenheit eines Permanentmagneten in der Nähe einer medizinisch aktiven Vorrichtung
Circuit for detecting the presence of a permanent magnet near to an active medical device

(30) Priorité: 24.03.2000 FR 0003744
(43) Date de publication de la demande: 26.09.2001
(73) Titulaire: ELA MEDICAL, 92541 Montrouge (FR)
(72) Inventeur: Legay, Thierry, 91640 Fontenay les Bris (FR)
(74) Mandataire: Dupuis-Latour, Dominique

(56) Documents cités:
- US-A- 4 611 127
- US-A- 4 821 023
- US-A- 6 018 296

## Description

L'invention concerne les "dispositifs médicaux actifs", et notamment les "dispositifs médicaux implantables actifs", tels que définis par la Directive 90/385/CE du 20 juin 1990 du Conseil des communautés européennes.

Cette définition inclut les stimulateurs cardiaques, défibrillateurs, cardioverteurs et/ou dispositifs multisite, mais aussi les appareils neurologiques, les pompes de diffusion de substances médicales, les implants cochléaires, les capteurs biologiques implantés, etc., ainsi que les dispositifs de mesure de pH ou encore d'impédance intracorporelle (telle que mesure d'impédance transpulmonaire ou d'impédance intracardiaque).

L'invention peut s'appliquer également de manière avantageuse à des dispositifs médicaux actifs non implantés tels que les enregistreurs Holter, qui sont des enregistreurs autonomes devant être portés par le patient pendant une longue période pour permettre le suivi en continu des signaux électrocardiographiques.

Nombre de ces appareils sont conçus pour être sensibles au placement d'un aimant permanent en regard du dispositif à proximité de celui-ci, notamment pour placer le dispositif dans une configuration prédéterminée à des fins de test ou pour permettre sa programmation (par télémétrie dans le cas d'un implant). Ce mode particulier, souvent appelé "mode à l'aimant" est un mode temporaire, car beaucoup de fonctions du dispositif sont inhibées dans ce mode, de sorte que le dispositif ne présente pas un fonctionnement optimum pendant cette phase.

Il est essentiel de détecter la présence de l'aimant de façon fiable (c'est-à-dire avec la meilleure réjection possible des phénomènes perturbateurs), tout en évitant de grever la consommation énergétique, facteur essentiel en matière d'implants médicaux autonomes dont la durée de vie doit être la plus longue possible.

Une première technique de détection de l'aimant consiste à utiliser un interrupteur à lame souple (ILS) qui vient commuter un circuit au sein du dispositif.

Une autre technique, à laquelle se réfère l'invention, est enseignée par le US-A-4 611 127, qui met en oeuvre un circuit oscillant LC dont la valeur d'inductance de la bobine diminue en présence d'un champ magnétique. Ce circuit résonnant est excité par un signal impulsionnel et un circuit mesure la fréquence propre d'oscillation résultante du circuit LC. En présence d'un aimant, une moindre valeur de l'inductance augmente cette fréquence de sorte que, en mesurant par exemple le délai de passage à zéro de la première alternance ou demi-alternance, on peut en déduire un abaissement de la valeur de l'inductance et par voie de conséquence la présence d'un aimant à proximité de la bobine.

L'inconvénient de cette technique est sa sensibilité aux parasites magnétiques ou électriques. En effet, des champs de forte intensité tels que ceux qui sont produits par exemple par les portiques antivol ou les fours à induction sont capables de produire une composante magnétique importante qui peut leurrer le circuit détecteur, car cette composante magnétique parasite a typiquement les mêmes effets sur la bobine et son circuit associé que le champ quasi-continu produit par un aimant.

Le problème est aggravé par le principe de mesure par échantillonnage, qui est adopté pour des raisons d'économie d'énergie propres aux implants actifs. Ainsi, dans le cas d'un appareil tel qu'un stimulateur cardiaque, la détermination de la présence d'un aimant est effectuée une fois par cycle cardiaque, avec le risque que l'implant, leurré par le champ magnétique alternatif parasite d'intensité suffisante pour faire varier la valeur de l'inductance, passe dans le mode à l'aimant de façon inappropriée et nocive pour la santé du porteur de l'appareil.

Un champ électrique de forte valeur peut également induire des parasites se superposant à la réponse impulsionnelle du circuit oscillant et, de la même façon, leurrer les moyens de discrimination du passage par zéro de cette réponse.

L'un des buts de l'invention est de proposer un circuit de détection de la présence d'un aimant qui élimine, ou tout au moins réduise dans des proportions très importantes, les inconvénients précités.

Le circuit de l'invention est du type général connu d'après le US-A-4 611 127 précité, c'est-à-dire comprenant : une bobine, apte à coopérer avec ledit aimant de manière à présenter une valeur diminuée d'inductance en présence de cet aimant ; un circuit résonnant LC incluant ladite bobine ; des moyens d'excitation impulsionnelle de ce circuit résonnant ; des moyens d'analyse de la réponse impulsionnelle du circuit résonnant ; et des moyens discriminateurs, aptes à évaluer la valeur d'inductance de la bobine à partir de la réponse impulsionnelle ainsi analysée et, corrélativement, à déterminer la présence ou l'absence de l'aimant.

Selon l'invention, les moyens d'excitation sont des moyens aptes à délivrer au circuit résonnant une salve de **N** impulsions successives, et les moyens d'analyse sont des moyens aptes à déterminer les **N** réponses impulsionnelles correspondantes, et les moyens discriminateurs sont des moyens aptes à déterminer la présence de l'aimant si, parmi les **N** réponses impulsionnelles analysées, un nombre **M** (**M ≤ N**, avec de préférence **M ≥ N/2**) d'entre elles sont des réponses correspondant à ladite valeur diminuée d'inductance.

Très avantageusement, les moyens d'excitation sont des moyens aptes, après avoir délivré une première impulsion, à ne délivrer ensuite les N-1 impulsions suivantes de la salve que si les moyens d'analyse ont préalablement détecté, pour cette première impulsion, une réponse impulsionnelle correspondant à une valeur diminuée d'inductance.

Les moyens d'excitation peuvent comprendre des moyens pour faire varier de manière pseudo-aléatoire l'instant de délivrance de la première impulsion de la salve et/ou les intervalles entre les instants de délivrance des impulsions successives de la salve.

Lorsque le dispositif médical implantable actif est un stimulateur cardiaque, défibrillateur, cardioverteur et/ou dispositif multisite, les impulsions successives de la salve sont de préférence délivrées sur une durée inférieure à la durée d'un cycle cardiaque mesuré ou stimulé par le dispositif.

On va maintenant décrire un exemple de mise en oeuvre de l'invention, en référence aux dessins annexés.

La figure 1 représente le circuit LC résonnant avec ses moyens d'excitation.

La figure 2 est un exemple d'organigramme indiquant les diverses étapes de mise en oeuvre de l'invention, dans le cas d'un stimulateur cardiaque.

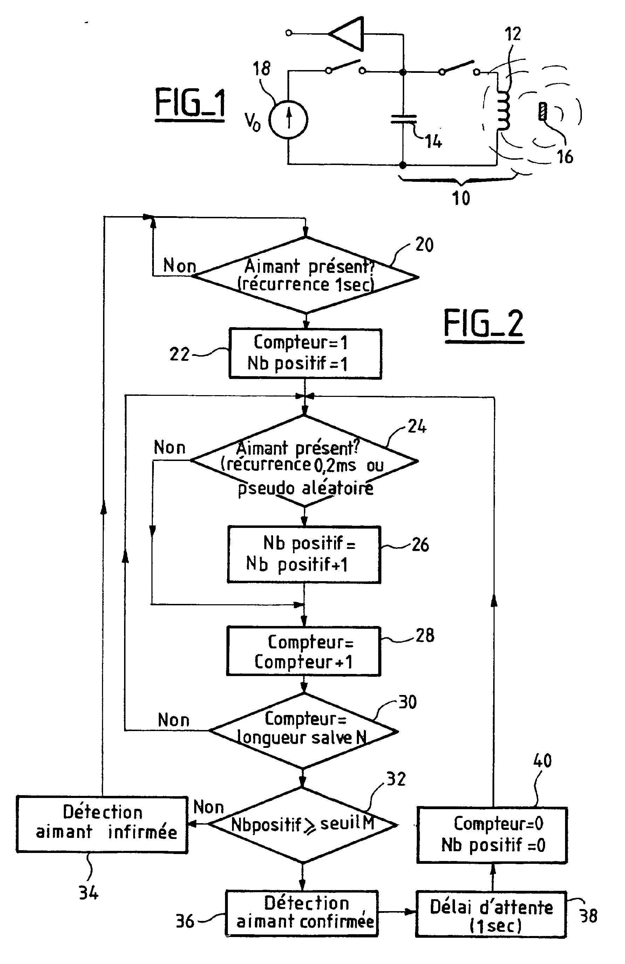

La figure 1 présente schématiquement le circuit résonnant LC 10, comprenant une bobine 12 associée (en série ou en parallèle) à un condensateur 14.

L'impédance de la bobine 12 va se trouver modifiée, dans le sens de l'abaissement de l'inductance, par la présence d'un aimant permanent 16 à proximité de l'implant. Cette diminution d'inductance va, corrélativement, augmenter la fréquence de résonance du circuit LC 10, modification qui pourra être détectée par un circuit approprié, par exemple en évaluant la réponse consécutive à la décharge du condensateur 14 dans l'inductance 12 préalablement chargé sous une tension Vₒ issue d'un générateur 18. Par exemple, on peut évaluer le délai pour le passage à zéro de la première demi-alternance ou de la première alternance, comme cela est enseigné par le US-A-4 611 127 précité auquel on pourra se référer pour plus de détails sur cette technique de détection de la présence d'un aimant à proximité d'un implant.

Jusqu'à présent, la détermination de la présence d'un aimant était effectuée par échantillonnage, une fois par cycle cardiaque (dans le cas où l'implant est un dispositif tel qu'un stimulateur cardiaque, défibrillateur, cardioverteur ou dispositif multisite).

L'invention propose de remplacer cette mesure par échantillonnage par une salve de mesures au cours d'un même cycle cardiaque.

On opère ainsi une série de **N** mesures (typiquement **N** = 64) à intervalles de 200 µs. Pour chacune de ces mesures on applique le procédé connu de détermination de la présence ou de l'absence de l'aimant, ou plus précisément de la présence ou de l'absence d'un champ magnétique d'intensité suffisante pour modifier de manière substantielle la valeur d'inductance de la bobine 12.

Une fois ces mesures effectuées, l'aimant est déclaré présent si, parmi les **N** échantillons, **M** mesures révèlent la présence d'un champ magnétique intense.

Le choix de **M** par rapport à **N** est un compromis entre spécificité et sensibilité de la détection de l'aimant. On choisit de préférence une valeur **M ≥ N/2**.

On notera que si la valeur de **M** est élevée, proche de **N**, la détection sera plus spécifique, mais moins sensible. Par exemple, en présence à la fois d'un bistouri électrique et d'un aimant, si **M** est trop élevé la composante magnétique, faible, de l'aimant risque de ne pas être détectée, le parasitage étant suffisant pour donner un résultat négatif, et ceci bien qu'il soit souhaitable de faire fonctionner l'implant en mode sous aimant en cas d'utilisation d'un bistouri électrique.

Très avantageusement, la salve n'est mise en oeuvre que si la première mesure est positive, ce qui permet dans la majeure partie du temps de préserver la consommation du système. En d'autres termes, la salve est une salve de confirmation, le mode le plus fréquent étant un mode de scrutation avec une mesure isolée, unique par cycle cardiaque.

Si la première mesure indique la présence d'un champ magnétique d'intensité suffisante, alors la salve sera émise pour déterminer la présence effective, ou non, d'un aimant selon la technique décrite plus haut.

De préférence, si cette salve confirme la présence effective d'un aimant, alors on émettra systématiquement une salve complète pour tous les cycles cardiaques qui suivent jusqu'à ce que le test échoue pour la première fois, auquel cas on reprendra le mode de scrutation par mesure isolée puis salve de confirmation éventuelle. En d'autres termes, tant que l'aimant sera détecté comme présent on enverra systématiquement une salve complète, indépendamment du résultat de la première mesure de la salve, et on ne repassera en mode de scrutation qu'après retrait de l'aimant.

Pour se protéger des parasites qui pourraient être en synchronisation ou en battement répétitif avec la fréquence des mesures dans la salve, on peut avantageusement produire des salves dans lesquelles on fait varier de manière pseudo-aléatoire l'intervalle entre deux impulsions d'une même salve et/ou la période de récurrence des salves.

La figure 2 illustre la séquence détaillée des opérations qui sont mises en oeuvre, avantageusement en logique câblée au moyen d'un microcontrôleur. En variante, cette technique peut être mise en oeuvre par logiciel, mais au détriment de la consommation de l'implant et donc de la durée de vie de celui-ci.

À l'étape 20, le processus est déclenché, avec une périodicité de l'ordre de la seconde, c'est-à-dire de la durée d'un cycle cardiaque au repos.

Après initialisation des compteurs (étape 22), la salve est émise et à chaque impulsion de la salve on effectue (étape 24) le test de présence de l'aimant, c'est-à-dire, plus précisément, la détermination d'un champ d'intensité suffisante pour abaisser de manière mesurable l'inductance de la bobine. Dans l'affirmative, on incrémente (étape 26) un premier compteur du nombre de mesures positives.

Dans tous les cas, on incrémente un compteur d'impulsions de la salve (étape 28) et, si le nombre d'impulsions **N** prévues dans la salve n'est pas atteint (étape 30), on réitère les étapes 24 à 28 précédemment décrites.

En fin de salve, on détermine (étape 32) si le nombre de mesures positives atteint ou non un seuil **M** prédéterminé.

Dans la négative (étape 34) la détection de l'aimant est infirmée et le processus se met en attente de l'instant de déclenchement de la prochaine salve (étape 20).

Dans l'affirmative, la détection de l'aimant est confirmée (étape 36) et, après une temporisation de l'ordre de la seconde (étape 38), les compteurs sont remis à zéro (étape 40) et le processus réitère le test de présence de l'aimant (étapes 24 et suivantes). Le dispositif reste par défaut dans le mode de scrutation avec salve de confirmation.

## Revendications

1. Un circuit de détection de la présence d'un aimant permanent au voisinage d'un dispositif médical actif, ce circuit comprenant :
- une bobine (12), apte à coopérer avec ledit aimant (16) de manière à présenter une valeur diminuée d'inductance en présence de cet aimant,
- un circuit résonnant LC (10) incluant ladite bobine,
- des moyens (18) d'excitation impulsionnelle de ce circuit résonnant,
- des moyens d'analyse de la réponse impulsionnelle du circuit résonnant, et
- des moyens discriminateurs, aptes à évaluer la valeur d'inductance de la bobine à partir de la réponse impulsionnelle ainsi analysée et, corrélativement, à déterminer la présence ou l'absence de l'aimant,
**caractérisé en ce que** :
- les moyens d'excitation sont des moyens aptes à délivrer au circuit résonnant une salve de N impulsions successives, et les moyens d'analyse sont des moyens aptes à déterminer les N réponses impulsionnelles correspondantes, et
- les moyens discriminateurs sont des moyens aptes à déterminer la présence de l'aimant si, parmi les N réponses impulsionnelles analysées, un nombre M (M ≤ N) d'entre elles sont des réponses correspondant à ladite valeur diminuée d'inductance.

2. Le circuit de la revendication 1, dans lequel M ≥ N/2.

3. Le circuit de la revendication 1, dans lequel les moyens d'excitation sont des moyens aptes, après avoir délivré une première impulsion, à ne délivrer ensuite les N-1 impulsions suivantes de la salve que si les moyens d'analyse ont préalablement détecté, pour cette première impulsion, une réponse impulsionnelle correspondant à une valeur diminuée d'inductance.

4. Le circuit de la revendication 1, dans lequel les moyens d'excitation comprennent des moyens pour faire varier de manière pseudo-aléatoire l'instant de délivrance de la première impulsion de la salve.

5. Le circuit de la revendication 1, dans lequel les moyens d'excitation comprennent des moyens pour faire varier de manière pseudo-aléatoire les intervalles entre les instants de délivrance des impulsions successives de la salve.

6. Le circuit de la revendication 1, dans lequel le dispositif médical implantable actif est un stimulateur cardiaque, défibrillateur, cardioverteur et/ou dispositif multisite, et les impulsions successives de la salve sont délivrées sur une durée inférieure à la durée d'un cycle cardiaque mesuré ou stimulé par le dispositif.

## Claims

1. A circuit for detecting the presence of a permanent magnet in the vicinity of an active medical device, said circuit comprising:
- a coil (12), adapted to cooperate with said magnet (16) so as to present a decreased inductance value in the presence of said magnet,
- a resonant LC circuit (10) including said coil,
- means (18) for pulse excitation of said resonant circuit,
- means for analyzing the pulse response of said resonant circuit, and
- discriminating means, adapted to evaluate the inductance value of the coil from the pulse response thus analyzed and, correlatively, to determine the presence or the absence of the magnet,
**characterized in that**:
- the excitation means are means adapted to issue to the resonant circuit a burst of N successive pulses, and the analyzing means are means adapted to determine the N corresponding pulse responses, and
- the discriminating means are means adapted to determine the presence of the magnet if, among the N pulse responses analyzed, a number M (M ≤ N) amongst them are responses corresponding to said reduced inductance value.

2. The circuit of claim 1, wherein M ≥ N/2.

3. The circuit of claim 1, wherein the excitation means comprise first means adapted for, after having issued a first pulse, further delivering the N-1 following pulses of the burst only if the analysis means has detected, for said first pulse, a pulse response corresponding to a decreased inductance value.

4. The circuit of claim 1, wherein the excitation means comprise means for varying in a pseudo-random manner the point in time when the first pulse of the burst is issued.

5. The circuit of claim 1, wherein the excitation means comprise means for varying in a pseudo-random manner the intervals between the points in time when the successive pulses are issued.

6. The circuit of claim 1, wherein the active implantable medical device is a pacemaker, a defibrillator, a cardiovertor and/or a multisite device, and the successive pulses of the burst are issued over a duration which is shorter than the duration of a cardiac cycle as measured or stimulated y the device.

## Patentansprüche

1. Detektionsschaltkreis des Vorhandenseins eines Permanentmagneten in Nachbarschaft einer aktiven medizinischen Vorrichtung, wobei dieser Schaltkreis umfasst:
- eine Spule (12), geeignet um mit dem Magneten (16) in der Weise zusammenzuwirken, um einen verringerten Induktivitätswert in Anwesenheit dieses Magneten aufzuweisen,
- ein Resonanzschaltkreis LC (10), welcher die Spule einschließt,
- Impulserregungsmittel (18) dieses Resonanzschaltkreises,
- Analysemittel der Impulsantwort des Resonanzschaltkreises, und Unterscheidungsmittel, dazu geeignet, den Induktivitätswert der Spule ausgehend von der so analysierten Impulsantwort auszuwerten, und entsprechend das Vorhandensein oder die Abwesenheit des Magneten zu bestimmen,
- **dadurch gekennzeichnet, dass**:
- die Erregungsmittel Mittel sind, die geeignet sind zum Liefern einer Salve von N aufeinanderfolgenden Impulsen zu dem resonanten Schaltkreis, und die Analysemittel Mittel sind, die dazu geeignet sind, die N entsprechenden Impulsantworten zu bestimmen, und
- die Unterscheidungsmittel Mittel sind, die dazu geeignet sind, das Vorhandensein des Magneten zu bestimmen wenn unter den N analysierten Impulsantworten eine Anzahl M (M≤N) von ihnen entsprechende Antworten auf den verringerten Induktivitätswert sind.

2. Schaltkreis nach Anspruch 1, in welchem M≥N/2 ist.

3. Schaltkreis nach Anspruch 1, in welchem die Erregungsmittel geeignete Mittel sind, um, nachdem ein erster Impuls geliefert wurde, dann nur die N-1 folgenden Impulse der Salve zu liefern, wenn die Analysemittel vorher für diesen ersten Impuls eine entsprechende Impulsantwort mit einem verringerten Induktivitätswert detektiert haben.

4. Schaltkreis nach Anspruch 1, in welchem die Erregungsmittel Mittel umfassen um den Moment der Lieferung des ersten Impulses der Salve in pseudo-zufälliger Weise zu variieren.

5. Schaltkreis nach Anspruch 1, in welchem die Erregungsmittel Mittel umfassen um in pseudo-zufälliger Weise die Intervalle zwischen den Liefermomenten der aufeinanderfolgenden Impulse der Salve zu variieren.

6. Schaltkreis nach Anspruch 1, in welchem die implantierbare aktive medizinische Vorrichtung ein Herzschrittmacher, Defibrillator, Kardioverter und/oder eine Multisit-Vorrichtung ist, und die aufeinanderfolgenden Impulse der Salve über eine Dauer geliefert werden, welche geringer als die Dauer eines Herzzyklus ist, welcher gemessen oder durch die Vorrichtung stimuliert wird.
